# FASCICULE DE BREVET EUROPEEN

(11) **EP 3 057 817 B1**
(45) Date de publication et mention de la délivrance du brevet: **04.12.2019**
(21) Numéro de dépôt: 14781546.8
(22) Date de dépôt: 08.10.2014
(51) Int. Cl.: B60K 6/08, B60K 6/36, B60K 6/12, B60K 6/20

(54) **DISPOSITIF DE MOTORISATION POUR VÉHICULE AUTOMOBILE**
ANTRIEBSVORRICHTUNG FÜR EIN KRAFTFAHRZEUG
MOTOR VEHICLE DRIVE DEVICE

(30) Priorité: 18.10.2013 FR 1360168
(43) Date de publication de la demande: 24.08.2016
(73) Titulaire: Societe Albigeoise de Fabrication et Reparation Automobile - SAFRA, 81000 Albi (FR); Chêne, Richard, 92200 Neuilly (FR); Delamour, Dominique, 78490 Les Mesnuls (FR); Miklitarian, Alain, 75014 Paris (FR); Rodi, Olivier, 78950 Gambais (FR)
(72) Inventeur: DELAMOUR, Dominique, F-78490 Les Mesnuls (FR)
(74) Mandataire: Argyma
(86) Numéro de dépôt international: PCT/EP2014/071484
(87) Numéro de publication internationale: WO 2015/055472

(56) Documents cités:
- DE-A1- 3 501 608
- FR-A1- 2 971 741
- US-A1- 2010 151 989

## Description

### DOMAINE TECHNIQUE GENERAL ET ART ANTERIEUR

La présente invention concerne le domaine des véhicules, en particulier, pour le transport de marchandises ou de personnes. Par véhicule de transport, on entend aussi bien une voiture particulière qu'un véhicule collectif du type bus. C'est d'ailleurs pour cette application que la demanderesse a voulu résoudre le problème qui est à l'origine de l'invention de la présente demande.

De manière ordinaire, un bus de transport comporte un ou plusieurs trains de roues qui sont entraînés en rotation par un dispositif de motorisation par l'intermédiaire, par exemple, d'un arbre de transmission, d'un pont et/ou d'un essieu. L'énergie fournie par le dispositif de motorisation permet le déplacement du bus de transport.

Afin d'optimiser la consommation d'énergie du dispositif de motorisation, il a déjà été proposé un dispositif de motorisation comportant différentes sources d'énergie. On connaît dans l'art antérieur, par la demande de brevet FR2971742, un véhicule de transport comportant un dispositif de motorisation comprenant un module de motorisation thermique, un module de motorisation hydraulique et un module de motorisation électrique. Par la suite, un tel dispositif de motorisation est qualifié de « tri-hybride ».

De manière connue, le dispositif de motorisation comporte une boîte de couplage comportant un arbre d'entrée de module thermique, un arbre d'entrée de module hydraulique et un arbre d'entrée de module électrique et une sortie adaptée pour entraîner un arbre moteur.

En pratique, une telle boîte de couplage présente un grand encombrement et une complexité importante, ce qui pénalise l'architecture du véhicule automobile. En particulier, il est nécessaire d'aligner précisément chaque arbre d'entrée de la boîte de couplage avec le module de motorisation adapté pour l'entraîner. De plus, il est nécessaire de relier précisément l'arbre du module de motorisation thermique avec la boîte de couplage, ce qui complexifie le montage et toute opération de maintenance.

En outre, une boîte de couplage avec trois arbres d'entrée nécessite d'utiliser un grand nombre de pignons. Du fait de son encombrement, une telle boîte de couplage diminue le volume disponible au sein d'un véhicule de transport, ce qui présente un inconvénient.

Enfin, l'encombrement et le poids d'une boîte de couplage sont importants étant donné qu'elle doit être robuste pour supporter les vibrations générées par le module de motorisation thermique.

Enfin, comme le module de motorisation thermique appartient à la chaîne de traction principale du véhicule, il est nécessaire de recourir, du fait de contraintes réglementaires, à un moteur thermique de grande capacité, en particulier, un moteur thermique pour poids lourd dont la masse et l'encombrement sont élevés. Un tel moteur thermique présente ainsi de nombreux inconvénients.

De manière incidente, on connaît par la demande de brevet US2010/0151989 un système de stockage d'énergie hydraulique pour un véhicule automobile comprenant une batterie électrique et un moteur électrique.

### PRESENTATION GENERALE DE L'INVENTION

L'invention a donc pour but de remédier à ces inconvénients en proposant un dispositif de motorisation qui soit compact, de conception simple et offrant une grande fiabilité.

L'invention est née à l'origine pour résoudre un problème lié à un moteur thermique mais elle s'applique de manière générale à tout dispositif de motorisation comportant plusieurs modules de motorisation.

A cet effet, l'invention concerne un dispositif de motorisation pour véhicule automobile de transport comportant au moins un module de motorisation hydraulique et un module de motorisation électrique principal, une boîte de couplage et un arbre de sortie adapté pour être entraîné par le module de motorisation hydraulique et/ou le module de motorisation électrique principal via ladite boîte de couplage, le module de motorisation hydraulique et le module de motorisation électrique principal étant reliés directement à ladite boîte de couplage.

L'invention est remarquable en ce que le dispositif de motorisation comporte en outre un module d'apport en énergie relié directement au module de motorisation hydraulique. Autrement dit, le module d'apport en énergie n'est pas relié directement à la boîte de couplage. Par module d'apport en énergie, on entend tout module adapté pour fournir de l'énergie au module de motorisation hydraulique, en particulier, un moteur thermique, une pile à combustible, etc. De préférence, le module d'apport en énergie est de conception simple et n'est pas adapté pour être rechargé au cours du fonctionnement du véhicule. De manière préférée, le module d'apport en énergie est configuré pour convertir une énergie non régénérable en énergie hydraulique. De préférence, le module d'apport en énergie est indépendant des modules de motorisation. Selon l'invention, la boîte de couplage comporte une première ligne d'engrenage, une deuxième ligne d'engrenage, reliée à l'arbre de sortie, et un moyen de liaison apte à associer les deux lignes d'engrenage. Une telle boîte de couplage est de conception simple, ce qui permet de diminuer son coût de fabrication.

L'utilisation d'un module d'apport en énergie dissocié de la boîte de couplage permet de sélectionner le module d'apport en énergie qui est le plus adapté en fonction du véhicule et de son lieu d'utilisation. Ainsi, le module d'apport en énergie peut utiliser du gaz, du gazole, de l'hydrogène, de l'éthanol. La flexibilité offerte par le dispositif de motorisation selon l'invention est ainsi avantageuse.

De préférence, le module de motorisation hydraulique comporte au moins un moteur hydraulique et un réservoir hydraulique adapté pour alimenter ledit moteur hydraulique, le module d'apport en énergie est adapté pour recharger ledit réservoir hydraulique.

Le dispositif de motorisation selon l'invention possède une boîte de couplage d'encombrement réduit étant donné qu'elle n'est pas reliée directement au module d'apport en énergie. En effet, il n'est pas nécessaire de prévoir, dans la boîte de couplage, un pignon pour se connecter au module d'apport en énergie. Le module de motorisation hydraulique et le module de motorisation électrique principal sont des modules de traction du véhicule tandis que le module d'apport en énergie ne forme qu'une réserve d'énergie adaptée pour convertir de l'énergie en une pression hydraulique.

Par analogie avec le domaine aéronautique, le module d'apport en énergie peut ainsi remplir une fonction de support similaire à celle d'un dispositif de puissance auxiliaire connu de l'homme du métier aéronautique sous la désignation de dispositif APU pour «Auxiliary Power Unit» ou une fonction de prolongateur d'autonomie connue de l'homme du métier sous la désignation anglaise de « range extender ».

De manière préférée, le module d'apport en énergie est relié au module de motorisation hydraulique par une liaison hydrostatique. Une telle liaison hydrostatique présente l'avantage d'être flexible, ce qui améliore la compacité du dispositif de motorisation. En outre, une liaison hydrostatique permet de s'affranchir d'une liaison mécanique dont la durée de vie est plus limitée et la maintenance plus complexe. Ainsi, les vibrations du module d'apport en énergie ne sont pas transmises au module de motorisation hydraulique, ce qui est avantageux.

Avantageusement, la liaison hydrostatique comporte un premier canal d'aspiration de fluide et un deuxième canal de retour de fluide reliés au module de motorisation hydraulique ainsi qu'un organe mécanique de compression, entraîné par ledit module d'apport en énergie, monté entre le premier canal d'aspiration de fluide et le deuxième canal de retour de fluide. Ainsi, le module d'apport en énergie permet de comprimer le fluide issu du module de motorisation hydraulique afin de lui apporter une énergie auxiliaire.

De manière préférée, la boîte de couplage est constituée d'une première ligne d'engrenage, d'une deuxième ligne d'engrenage, reliée à l'arbre de sortie, et d'un moyen de liaison apte à associer les deux lignes d'engrenage. Autrement dit, la boîte de couplage peut ne comporter qu'un nombre limité de lignes d'engrenage ainsi qu'un nombre limité de moyens de liaison.

De préférence encore, chaque ligne d'engrenage comporte une pluralité de pignons. Une ligne d'engrenage dépourvue d'organes épicycloïdaux possède une durée de vie améliorée et un encombrement limité.

De manière préférée, le module de motorisation hydraulique est connecté à la première ligne d'engrenage et le module de motorisation électrique principal est connecté à la deuxième ligne d'engrenage. Ainsi, le moyen de liaison permet d'arbitrer entre les différentes sources d'énergie pour entraîner le véhicule.

Avantageusement, le dispositif de motorisation comporte un module de motorisation électrique auxiliaire, connecté à la première ligne d'engrenage. Ainsi, le module de motorisation électrique auxiliaire permet d'alimenter des équipements du véhicule (climatisation, etc.). En outre, le module de motorisation électrique auxiliaire permet également de fournir de l'énergie au module de motorisation hydraulique afin que ce dernier reconstitue ses réserves.

Selon un aspect de l'invention, le module de motorisation électrique auxiliaire et le module de motorisation hydraulique sont connectés à un même pignon de la première ligne d'engrenage afin d'optimiser le rendement de recharge du module de motorisation hydraulique par le module de motorisation électrique auxiliaire.

De préférence, le module de motorisation électrique auxiliaire comportant une génératrice, le module de motorisation hydraulique est configuré pour entraîner ladite génératrice.

Dans une forme de réalisation particulière, la première ligne d'engrenage comporte au moins deux pignons, de préférence, trois pignons. Une première ligne d'engrenage comportant trois pignons permet avantageusement de monter le module de motorisation hydraulique à distance du pignon adapté pour se lier avec la deuxième ligne d'engrenage. L'utilisation d'un pignon intermédiaire permet de limiter la dimension des autres pignons de la première ligne d'engrenage, ce qui diminue l'encombrement global de la boîte de couplage ainsi que son poids. De préférence, la première ligne d'engrenage ne comporte que trois pignons.

Selon un autre aspect de l'invention, la deuxième ligne d'engrenage comporte au moins deux pignons de manière à permettre, d'une part, la liaison à la première ligne d'engrenage et, d'autre part, la liaison à l'arbre de sortie. De préférence, la deuxième ligne d'engrenage ne comporte que deux pignons.

L'invention concerne également un véhicule automobile, de préférence du type bus, comportant au moins un train de roues et un dispositif de motorisation, tel que présenté précédemment, pour entraîner ledit train de roues.

De préférence, le véhicule comporte un corps principal et un corps auxiliaire amovible dudit corps principal, le module d'apport en énergie étant monté dans ledit corps auxiliaire.

De manière préférée, le module d'apport en énergie est un module de motorisation thermique. De préférence, le carburant du module de motorisation thermique est de l'essence, du gazole, de l'hydrogène ou de l'éthanol.

Le module de motorisation thermique est simple à installer et à maintenir étant donné qu'il n'existe plus de besoin d'aligner un arbre moteur du module de motorisation thermique avec un pignon de la boîte de couplage. Grâce à l'invention, le module de motorisation thermique peut être placé et orienté sans contraintes, ce qui permet d'augmenter la compacité du dispositif de motorisation.

Un apport d'énergie mécanique du module de motorisation thermique vers la boîte de couplage est avantageusement évité, l'énergie mécanique du module de motorisation thermique étant transmise directement au module de motorisation hydraulique. Ainsi, les vibrations du module de motorisation thermique ne sont pas transmises à la boîte de couplage, ce qui est avantageux.

De manière avantageuse, le module de motorisation thermique ne constitue pas une partie de la chaîne de traction principale du véhicule. Le module de motorisation thermique se comporte comme une source d'énergie auxiliaire adaptée pour alimenter en cas de besoin le module de motorisation hydraulique. Ainsi, le module de motorisation thermique ayant un rôle secondaire d'appoint, il peut être de conception simple, ce qui permet d'en diminuer la masse, l'encombrement et le coût.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique de côté d'un bus de transport selon l'invention ;
- la figure 2 est une représentation schématique fonctionnelle d'une forme de réalisation du dispositif de motorisation selon l'invention avec une boîte de couplage reliée à une pluralité de modules de motorisation ; et
- la figure 3 est une représentation schématique structurelle d'une forme de réalisation d'une boîte de couplage du dispositif de motorisation selon l'invention.

### DESCRIPTION D'UN OU PLUSIEURS FORMES DE REALISATION ET MODES DE MISE EN OEUVRE

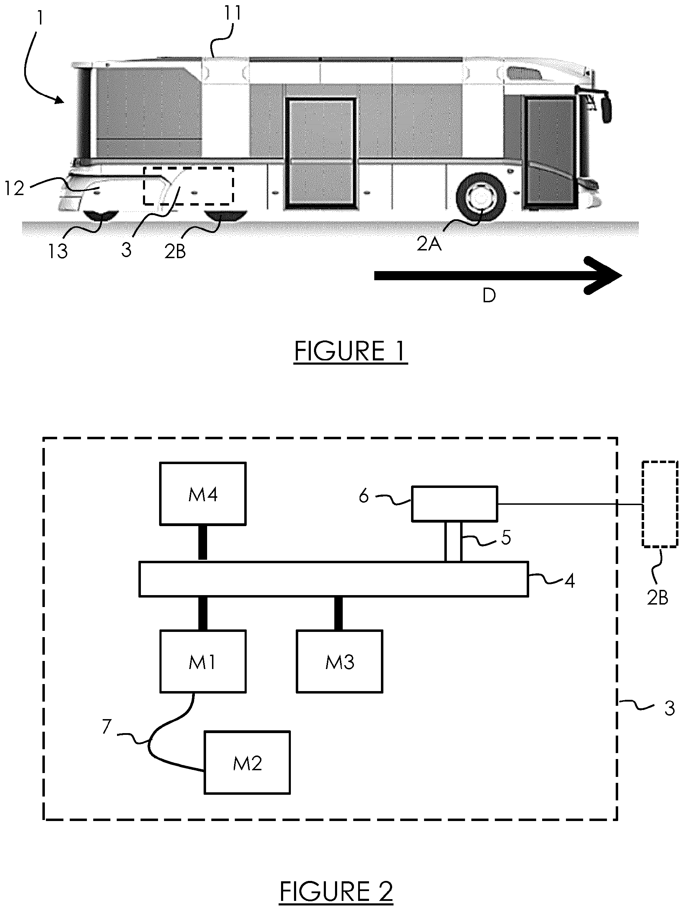

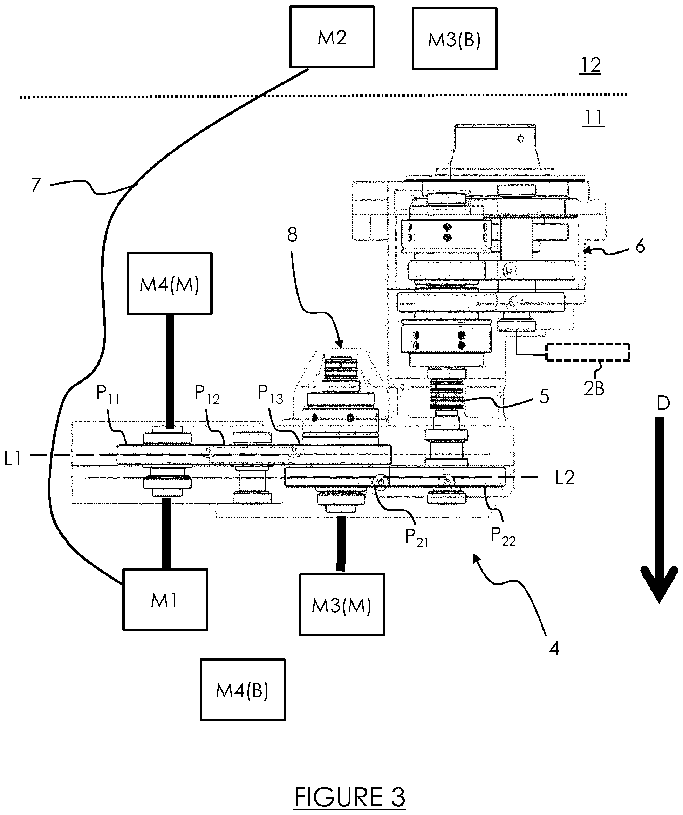

En référence à la figure 1, il est représenté un bus de transport 1 comportant un corps principal 11 définissant au moins un espace de vie pour des passagers. Le corps principal 11 est équipé d'un train de roues avant 2A et d'un train de roues arrière 2B pour permettre au bus de se déplacer, en particulier, sur une route. Par la suite, les termes « avant » et « arrière » sont définis par rapport à la flèche D représentée aux figures 1 et 3 pour indiquer le sens de déplacement usuel du bus de transport 1 de l'arrière vers l'avant.

Dans cette forme de réalisation, le bus de transport 1 comporte en outre un corps auxiliaire 12, appelé également « pack énergie », qui est monté de manière amovible par rapport au corps principal 11. De préférence, le corps auxiliaire de stockage d'énergie 12 est équipé de roues 13 afin de faciliter sa manipulation lorsqu'il est séparé du corps principal 11 du bus de transport 1.

Comme illustré à la figure 1, le bus de transport 1 comporte un dispositif de motorisation 3, représenté de manière schématique, qui est relié mécaniquement ici au train de roues arrière 2B afin de lui fournir l'énergie permettant son déplacement. De manière connue, l'énergie motrice est fournie aux roues arrière 2B par l'intermédiaire d'un arbre de transmission, d'un pont et/ou d'un essieu.

En référence à la figure 2, le dispositif de motorisation 3 comprend un module de motorisation hydraulique M1, un module de motorisation électrique principal M3 et un module de motorisation électrique auxiliaire M4 qui sont reliés à une boîte de couplage 4 comportant un arbre de sortie 5. Dans cet exemple, l'arbre de sortie 5 est relié au train de roues arrière 2B par l'intermédiaire d'une boîte de vitesses 6 connue de l'homme du métier. Le dispositif de motorisation 3 comporte en outre un module d'apport d'énergie M2 qui se présente, dans cet exemple, sous la forme d'un module de motorisation thermique M2 mais il va de soi qu'une pile à combustible pourrait également convenir.

L'arbre de sortie 5 de la boîte de couplage 4 est adapté pour délivrer un couple de sortie à la boîte de vitesses 6 à partir des énergies fournies directement ou indirectement par les modules M1-M4 qui vont être maintenant présentés.

Le module de motorisation hydraulique M1 comporte un moteur hydraulique, une pompe hydraulique et un réservoir hydraulique adapté pour alimenter ledit moteur hydraulique. Un tel module de motorisation hydraulique M1 est connu en tant que tel de la demande FR2971742. Dans cette forme de réalisation préférée, le réservoir hydraulique se présente sous la forme de deux bouteilles d'huile sous pression, de préférence, une bouteille haute pression et une bouteille basse pression. Le module de motorisation hydraulique M1 est relié directement à la boîte de couplage 4 afin de lui fournir ou recevoir un couple moteur. Il a été présenté dans cet exemple un module de motorisation hydraulique M1 dans lequel le moteur hydraulique et la pompe hydraulique sont associés mais il va de soi que l'invention s'applique de manière similaire à un module de motorisation hydraulique M1 dans lequel le moteur hydraulique et la pompe hydraulique sont dissociés, l'important étant que le module de motorisation hydraulique M1 puisse fournir et recevoir de l'énergie.

Le module de motorisation thermique M2 comporte, pour sa part, un moteur thermique, de préférence un moteur thermique de véhicule automobile, et un réservoir de carburant afin d'alimenter ledit moteur thermique. Comme cela sera détaillé par la suite, le moteur thermique n'est pas relié directement à la boîte de couplage 4 mais indirectement via le module de motorisation hydraulique M1.

Le module de motorisation électrique principal M3 comporte un moteur électrique principal M3(M) (Figure 3) associé à une génératrice et une batterie principale de stockage d'énergie électrique M3(B) (Figure 3), dont la tension est, dans cet exemple, de 450V. De manière similaire au module de motorisation hydraulique M1, le module de motorisation électrique principal M3 est relié directement à la boîte de couplage 4 afin de lui fournir ou recevoir un couple moteur.

Le module de motorisation électrique auxiliaire M4 comporte un moteur électrique auxiliaire M4(M) (Figure 3) qui est alimenté par une batterie électrique auxiliaire M4(B) (Figure 3) dont la tension est, dans cet exemple, de 450V. De préférence, le module de motorisation électrique auxiliaire M4 comporte également une génératrice. De manière similaire, le module de motorisation électrique auxiliaire M4 est relié directement à la boîte de couplage 4 afin de lui fournir ou recevoir un couple moteur. Le module de motorisation électrique auxiliaire M4 permet de recharger la batterie auxiliaire M4(B) sur lequel sont branchés les équipements du bus de transport 1, en particulier, la climatisation dudit bus de transport 1. Dans cette forme de réalisation préférée, la batterie électrique auxiliaire M4(B) possède une capacité plus faible que la batterie électrique principale M3(B).

La boîte de couplage 4 permet de coupler l'énergie des modules de motorisation M1, M3, M4 afin de fournir de l'énergie à l'arbre de sortie 5, le module de motorisation thermique M2 formant une source d'énergie auxiliaire utilisable par le module de motorisation hydraulique M1. Il va de soi que d'autres modules de motorisation pourraient être couplés à la boîte de couplage, en particulier, un module de motorisation à énergie cinétique du type volant à inertie.

Selon l'invention, le module de motorisation thermique M2 est relié directement au module de motorisation hydraulique M1. Autrement dit, la boîte de couplage 4 n'est pas reliée directement au module de motorisation thermique M2, ce qui permet de diminuer la complexité de la boîte de couplage 4 et ainsi diminuer son encombrement et son coût de fabrication.

De préférence, le module de motorisation thermique M2 est relié directement au module de motorisation hydraulique M1 par une liaison hydrostatique 7. Une telle liaison hydrostatique 7 est flexible, ce qui permet de s'affranchir des contraintes d'alignement liées à un arbre physique. De plus, une liaison hydrostatique 7 est avantageuse car elle permet d'obtenir une vitesse variable, de contrôler un couple variable et de maintenir une puissance constante. En outre, les efforts vibratoires ne sont pas transmis au module de motorisation hydraulique M1 et à la boîte de couplage 4. L'encombrement et la masse de la boîte de couplage 4 peuvent être ainsi diminués.

Dans cette forme de réalisation, la liaison hydrostatique 7 se présente sous la forme d'une tuyauterie flexible comportant un fluide sous pression, de préférence, de l'huile. La liaison hydrostatique 7 comporte des organes mécaniques (pompe hydraulique, etc.) qui convertissent l'énergie mécanique fournie par le module de motorisation thermique M2 en pression hydraulique pour le module de motorisation hydraulique M1. En particulier, la liaison hydrostatique 7 comporte une pompe hydraulique qui prélève du liquide dans le réservoir hydraulique du module de motorisation hydraulique M1, via un premier canal dit d'aspiration, pour le comprimer et entraîner le moteur hydraulique du module de motorisation hydraulique M1 via un deuxième canal dit de retour.

De préférence, chaque canal comporte un coupleur de manière à déconnecter la liaison hydrostatique 7. De tels coupleurs sont avantageux pour permettre la séparation du corps auxiliaire de stockage d'énergie 12 du corps principal 11 du bus de transport 1.

Autrement dit, le module de motorisation thermique M2 fournit de l'énergie à la boîte de couplage 4 via le module de motorisation hydraulique M1.

### Architecture du dispositif de motorisation 3

En référence à la figure 3, le module de motorisation thermique M2 et la batterie de stockage principale M3(B) sont de préférence montés dans le corps auxiliaire de stockage d'énergie 12 tandis que la boîte de couplage 4 est montée dans le corps principal 11 avec le module de motorisation hydraulique M1 et le module de motorisation électrique auxiliaire M4.

Ainsi, en cas de panne du module de motorisation thermique M2 ou de la batterie de stockage principale M3(B), ceux-ci peuvent être remplacés de manière rapide et pratique en remplaçant un corps auxiliaire de stockage d'énergie défectueux 12 par un nouveau corps auxiliaire de stockage d'énergie 12. Grâce à l'architecture du dispositif de motorisation 3, les modules de motorisation sont logés de manière optimale dans le corps auxiliaire de stockage d'énergie 12, ce qui limite son encombrement. En outre, les vibrations relatives au module de motorisation thermique M2 sont amorties par le corps auxiliaire de stockage d'énergie 12, c'est-à-dire du pack énergie, et ne sont pas transmises au corps principal 11 qui est adapté pour accueillir les passagers. Le confort des passagers du bus de transport 1 est ainsi amélioré.

De manière avantageuse, la liaison entre le corps principal 11 et le corps auxiliaire 12 est simple. Le module de motorisation thermique M2 peut être aisément séparé du module de motorisation hydraulique M1 en déconnectant la liaison hydrostatique 7, par exemple, au moyen des coupleurs précédemment présentés. De même, en ce qui concerne le module de motorisation électrique principal M3, la batterie M3(B) peut être aisément séparée du moteur électrique M3(M). De manière avantageuse, on peut procéder au rechargement de la batterie M3(B) en séparant le corps auxiliaire de stockage d'énergie 12 du corps principal 11 afin de placer la batterie dans une zone de rechargement dédiée.

Le module de motorisation électrique auxiliaire M4 est, pour sa part, monté dans le corps principal 11. Le module de motorisation électrique auxiliaire M4, appelé également génératrice, permet de recharger le module de motorisation hydraulique M1. Dans d'autres configurations d'utilisation, le module de motorisation électrique auxiliaire M4 est rechargé par le module de motorisation hydraulique M1 avec ou sans assistance du module de motorisation thermique M2.

La structure de la boîte de couplage 4 va être maintenant présentée en détails.

### Structure de la boîte de couplage

En référence à la figure 3, la boîte de couplage 4 comprend une première ligne d'engrenage L1, une deuxième ligne d'engrenage L2 et un élément de liaison 8 apte à coupler les deux lignes d'engrenage L1, L2, s'étendant parallèlement l'une à l'autre.

Chaque ligne d'engrenage L1, L2 comporte une pluralité de pignons simples, sans train épicycloïdal, ce qui augmente la fiabilité de la boîte de couplage 4 et en diminue la complexité, l'encombrement et les coûts de maintenance.

De préférence, les lignes d'engrenage L1, L2 sont parallèles et s'étendent orthogonalement à la direction selon laquelle se déplace le bus de transport 1. Dans cette forme de réalisation, la première ligne d'engrenage L1 est située en arrière de la deuxième ligne d'engrenage L2 comme illustré à la figure 3.

De manière ordinaire, un pignon comporte un corps central monté sur un arbre rotatif et une denture extérieure adaptée pour coopérer avec une denture d'un autre pignon afin de lui transmettre un couple rotatif. Un engrenage à pignons étant connu de l'homme du métier, le fonctionnement général ne sera pas présenté plus en détails.

Dans cette forme de réalisation préférée, en référence à la figure 3, la première ligne d'engrenage L1 comprend trois pignons P₁₁, P₁₂, P₁₃ qui sont associés en série de manière à ce que la denture du premier pignon P₁₁ engrène avec la denture du deuxième pignon P₁₂ qui engrène elle-même avec le troisième pignon P₁₃.

De préférence, en référence à la figure 3, le moteur électrique M4(M) du module de motorisation électrique auxiliaire M4 est placé en arrière de la boîte de couplage 4 tandis que la batterie électrique M4(B) du module de motorisation électrique auxiliaire M4 est placée en avant de la boîte de couplage 4. Une telle configuration permet d'augmenter la compacité du dispositif de motorisation 3. Le module de motorisation hydraulique M1 et le moteur électrique auxiliaire M4(M) sont reliés au premier pignon P₁₁ de la première ligne d'engrenage L1.

Comme le module de motorisation hydraulique M1 et le moteur électrique auxiliaire M4(M) sont reliés à un même pignon P₁₁ de la première ligne d'engrenage L1, il existe une liaison directe entre les deux modules de motorisation M1, M4, ce qui facilite, d'une part, le rechargement du module de motorisation hydraulique M1 par le module de motorisation électrique auxiliaire M4 et, d'autre part, le rechargement du module de motorisation électrique auxiliaire M4 par le module de motorisation hydraulique M1.

En particulier, lors du freinage du bus de transport 1, l'énergie cinétique récupérée est partagée entre le module de motorisation hydraulique M1, le module de motorisation électrique principal M3 et le module de motorisation électrique auxiliaire M4.

Le troisième pignon P₁₃ de la première ligne d'engrenage L1 est adapté pour être couplé à la deuxième ligne d'engrenage L2 comme cela va être détaillé par la suite.

Le deuxième pignon P₁₂ de la première ligne d'engrenage L1 est un pignon intermédiaire adapté pour relier le premier pignon P₁₁ au troisième pignon P₁₃. Un tel pignon intermédiaire permet d'augmenter l'espace entre les deux pignons P₁₁, P₁₃ et ainsi d'augmenter l'espace disponible pour le module de motorisation hydraulique M1 et le module de motorisation électrique auxiliaire M4 vis-à-vis de la deuxième ligne d'engrenage L2 et du module de motorisation électrique principal M3. Dans l'exemple de la figure 2, les pignons P₁₁, P₁₂, P₁₃ de la première ligne d'engrenage L1 possèdent respectivement des diamètres de 22 cm, 18 cm et 22 cm.

Il va de soi que la première ligne d'engrenage L1 ne pourrait comprendre que deux pignons P₁₁, P₁₃. Dans ce cas, les pignons P₁₁, P₁₃ devraient posséder un diamètre important pour permettre un positionnement côte à côte du module de motorisation hydraulique M1 et du moteur électrique principal M3(M) en avant de la boîte de couplage 4 comme illustré à la figure 3.

Toujours en référence à la figure 3, la deuxième ligne d'engrenage L2 comporte, pour sa part, un premier pignon P₂₁ et un deuxième pignon P₂₂. Le premier pignon P₂₁ de la deuxième ligne d'engrenage L2 est adapté pour être connecté à la première ligne d'engrenage L1 comme cela sera présenté par la suite.

Le moteur électrique principal M3(M) est relié au premier pignon P₂₁ de la deuxième ligne d'engrenage L2. Dans cette forme de réalisation, le moteur électrique principal M3(M) est placé en avant de la boîte de couplage 4 c'est à dire, du même côté que le module de motorisation hydraulique M1.

Le deuxième pignon P₂₂ de la deuxième ligne d'engrenage L2 est pour sa part relié à l'arbre de sortie 5 afin de transmettre le couple reçu par le premier pignon P₂₁ aux roues arrière 2B via la boîte de vitesses 6.

La boîte de couplage 4 permet d'associer les différentes énergies des modules de motorisation M1, M3 et M4 afin de fournir un couple adapté à l'arbre de sortie 5 tout en optimisant la récupération d'énergie, en particulier, lors du freinage du bus de transport 1.

Toujours en référence à la figure 3, la boîte de couplage 4 comporte un élément de liaison 8 adapté pour rendre solidaires en rotation le troisième pignon P₁₃ de la première ligne d'engrenage L1 avec le premier pignon P₂₁ de la deuxième ligne d'engrenage L2. Dans cet exemple, l'élément de liaison 8 se présente sous la forme d'un embrayage mais il va de soi que d'autres types de liaison pourraient convenir, par exemple, un dispositif de synchronisation de vitesse connu de l'homme du métier sous la désignation de « synchromesh » qui comporte un élément craboté et un élément baladeur.

Lorsque l'élément de liaison 8 est activé, les lignes d'engrenage L1, L2 sont reliées ensemble, ce qui permet aux modules de motorisation M1, M4 de participer à l'entraînement de l'arbre de sortie 5 et/ou recevoir un couple dudit arbre de sortie 5.

II va de soi que le dispositif de motorisation 3 pourrait comprendre d'autres modules de motorisation, par exemple, un module de motorisation à énergie cinétique tel qu'un volant à inertie.

### Exemples de mises en œuvre

Plusieurs mises en œuvre de l'invention vont être maintenant présentées afin d'illustrer le fonctionnement du dispositif de motorisation 3.

A titre d'exemple, le bus de transport 1 démarre grâce au module de motorisation électrique principal M3 avec une assistance fournie par le module de motorisation hydraulique M1. Après augmentation de la vitesse, le module de motorisation électrique principal M3 fournit à lui seul le couple à l'arbre de sortie 5. L'élément de liaison 8 est désactivé, seule la deuxième ligne d'engrenage L2 entraîne l'arbre de sortie 5. Pour atteindre une vitesse élevée, le module de motorisation électrique principal M3 est assisté par le module de motorisation hydraulique M1 qui est lui-même assisté par le module de motorisation thermique M2.

Le module de motorisation thermique M2 permet de recharger directement le module de motorisation hydraulique M1 via sa liaison hydrostatique 7 sans passer par un pignon de la boîte de couplage 4. Cette recharge est réalisée en débrayant la première ligne d'engrenage L1 de la deuxième ligne d'engrenage L2. Dans cet exemple de mise en œuvre, le module de motorisation thermique M2 ne peut pas recharger le module de motorisation électrique principal M3.

Autrement dit, le module de motorisation thermique M2 se comporte comme une source d'énergie auxiliaire adaptée pour suppléer les besoins du module de motorisation hydraulique M1. Par analogie avec le domaine aéronautique, le module de motorisation thermique M2 peut remplir une fonction de support similaire à celle d'un dispositif de puissance auxiliaire connu de l'homme du métier aéronautique sous la désignation de dispositif APU pour «Auxiliary Power Unit». De même, le module de motorisation thermique M2 peut remplir une fonction de prolongateur d'autonomie, connue de l'homme du métier sous la désignation anglaise de « range extender ».

Le module de motorisation électrique auxiliaire M4 est adapté pour alimenter des organes auxiliaires du bus de transport 1, par exemple, le moteur de climatisation. En outre, il est adapté pour recharger le module de motorisation hydraulique M1 en cas de besoin. Une telle recharge possède un rendement élevé étant donné que le module de motorisation électrique auxiliaire M4 et le module de motorisation hydraulique M1 sont connectés à un même pignon P₁₁ de la première ligne d'engrenage L1.

Grâce à l'invention, on obtient un dispositif de motorisation qui est compact, de conception simple et offrant une grande fiabilité. En outre, en cas de défaillance d'un des modules de motorisation, le corps auxiliaire de stockage d'énergie 12 permet un remplacement rapide desdits modules, ce qui garantit une disponibilité accrue du bus de transport 1.

## Revendications

1. Dispositif de motorisation (3) pour véhicule automobile de transport (1) comportant au moins un module de motorisation hydraulique (M1) et un module de motorisation électrique principal (M3), une boîte de couplage (4) et un arbre de sortie (5) adapté pour être entraîné par le module de motorisation hydraulique (M1) et/ou le module de motorisation électrique principal (M3) via ladite boîte de couplage (4), le module de motorisation hydraulique (M1) et le module de motorisation électrique principal (M3) étant reliés directement à ladite boîte de couplage (4), le dispositif de motorisation (3) comportant en outre un module d'apport en énergie (M2) relié directement au module de motorisation hydraulique (M1), **dispositif caractérisé par le fait que** la boîte de couplage (4) comporte une première ligne d'engrenage (L1), une deuxième ligne d'engrenage (L2), reliée à l'arbre de sortie (5), et un moyen de liaison (8) apte à associer les deux lignes d'engrenage (L1, L2).

2. Dispositif selon la revendication 1, dans lequel le module d'apport en énergie (M2) est relié au module de motorisation hydraulique (M1) par une liaison hydrostatique (7).

3. Dispositif selon l'une des revendications 1 et 2, dans lequel chaque ligne d'engrenage (L1, L2) comporte une pluralité de pignons (P₁₁, P₁₂, P₁₃, P₂₁, P₂₂).

4. Dispositif selon l'une des revendications 1 à 3, dans lequel le module de motorisation hydraulique (M1) est connecté à la première ligne d'engrenage (L1) et le module de motorisation électrique principal (M3) est connecté à la deuxième ligne d'engrenage (L2).

5. Dispositif selon l'une des revendications 1 à 4, dans lequel, le dispositif de motorisation (3) comporte un module de motorisation électrique auxiliaire (M4), connecté à la première ligne d'engrenage (L1).

6. Dispositif selon la revendication 5, dans lequel le module de motorisation électrique auxiliaire (M4) et le module de motorisation hydraulique (M1) sont connectés à un même pignon (P₁₁) de la première ligne d'engrenage (L1).

7. Dispositif selon la revendication 5 à 6, dans lequel, le module de motorisation électrique auxiliaire (M4) comportant une génératrice, le module de motorisation hydraulique (M1) est configuré pour entraîner ladite génératrice.

8. Dispositif selon l'une des revendications 1 à 7, dans lequel le module d'apport en énergie (M2) est un module de motorisation thermique.

9. Véhicule automobile (1), de préférence du type bus, comportant au moins un train de roues (2A, 2B) et un dispositif de motorisation (3) selon l'une des revendications précédentes pour entraîner ledit train de roues (2A, 2B).

## Patentansprüche

1. Antriebsvorrichtung (3) für Transportkraftfahrzeug (1), aufweisend mindestens ein hydraulisches Antriebsmodul (M1) und ein elektrisches Hauptantriebsmodul (M3), eine Kopplungseinrichtung (4) und eine Ausgangswelle (5), die geeignet ist, von dem hydraulischen Antriebsmodul (M1) und/oder dem elektrischen Hauptantriebsmodul (M3) über die besagte Kopplungseinrichtung (4) angetrieben zu werden, wobei das hydraulische Antriebsmodul (M1) und das elektrische Hauptantriebsmodul (M3) direkt mit der besagten Kopplungseinrichtung (4) verbunden sind, wobei die Antriebsvorrichtung (3) ferner ein Energiezufuhrmodul (M2) aufweist, das direkt mit dem hydraulischen Antriebsmodul (M1) verbunden ist, wobei die Vorrichtung **dadurch gekennzeichnet ist, dass** die Kopplungseinrichtung (4) eine erste Getriebelinie (L1), eine zweite Getriebelinie (L2), die mit der Ausgangswelle (5) verbunden ist, und ein Verbindungsmittel (8) aufweist, das imstande ist, die zwei Getriebelinien (L1, L2) zuzuordnen.

2. Vorrichtung nach Anspruch 1, wobei das Energiezufuhrmodul (M2) mit dem hydraulischen Antriebsmodul (M1) mittels einer hydrostatischen Verbindung (7) verbunden ist.

3. Vorrichtung nach einem der Ansprüche 1 und 2, wobei jede Getriebelinie (L1, L2) eine Vielzahl von Zahnrädern (P₁₁, P₁₂, P₁₃, P₂₁, P₂₂) aufweist.

4. Vorrichtung nach einem der Ansprüche 1 bis 3, wobei das hydraulische Antriebsmodul (M1) an die erste Getriebelinie (L1) angeschlossen ist und das elektrische Hauptantriebsmodul (M3) an die zweite Getriebelinie (L2) angeschlossen ist.

5. Vorrichtung nach einem der Ansprüche 1 bis 4, wobei die Antriebsvorrichtung (3) ein elektrisches Hilfsantriebsmodul (M4) aufweist, das an die erste Getriebelinie (L1) angeschlossen ist.

6. Vorrichtung nach Anspruch 5, wobei das elektrische Hilfsantriebsmodul (M4) und das hydraulische Antriebsmodul (M1) an dasselbe Zahnrad (P₁₁) der ersten Getriebelinie (L1) angeschlossen sind.

7. Vorrichtung nach Anspruch 5 bis 6, wobei, wobei das elektrische Hilfsantriebsmodul (M4) einen Generator aufweist, das hydraulische Antriebsmodul (M1) konfiguriert ist, um den besagten Generator anzutreiben.

8. Vorrichtung nach einem der Ansprüche 1 bis 7, wobei das Energiezufuhrmodul (M2) ein thermisches Antriebsmodul ist.

9. Kraftfahrzeug (1), vorzugsweise von Typ Bus, aufweisend mindestens einen Radsatz (2A, 2B) und eine Antriebsvorrichtung (3) nach einem der vorangehenden Ansprüche, um den besagten Radsatz (2A, 2B) anzutreiben.

## Claims

1. A motorisation device (3) for a transport motor vehicle (1) including at least one hydraulic motorisation module (M1) and a main electrical motorisation module (M3), a coupling unit (4) and an output shaft (5) adapted to be driven by the hydraulic motorisation module (M1) and/or the main electrical motorisation module (M3) via said coupling unit (4), the hydraulic motorisation module (M1) and the main electrical motorisation module (M3) being directly connected to said coupling unit (4), the motorisation device (3) further including an energy feeding module (M2) directly connected to the hydraulic motorisation module (M1), device **characterised in that** the coupling unit (4) includes a first gear line (L1), a second gear line (L2), connected to the output shaft (5), and a connecting means (8) able to associate both gear lines (L1, L2).

2. The device according to claim 1, wherein the energy feeding module (M2) is connected to the hydraulic motorisation module (M1) through a hydrostatic connection (7).

3. The device according to one of claims 1 and 2, wherein each gear line (L1, L2) includes a plurality of pinions (P₁₁, P₁₂, P₁₃, P₂₁, P₂₂).

4. The device according to one of claims 1 to 3, wherein the hydraulic motorisation module (M1) is connected to the first gear line (L1) and the main electrical motorisation module (M3) is connected to the second gear line (L2).

5. The device according to one of claims 1 to 4, wherein the motorisation device (3) includes an auxiliary electrical motorisation module (M4), connected to the first gear line (L1).

6. The device according to claim 5, wherein the auxiliary electrical motorisation module (M4) and the hydraulic motorisation module (M1) are connected to a same pinion (P₁₁) of the first gear line (L1).

7. The device according to claims 5 and 6, wherein, the auxiliary electrical motorisation module (M4) including a generator, the hydraulic motorisation module (M1) is configured to drive said generator.

8. The device according to one of claims 1 to 7, wherein the energy feeding module (M2) is a thermal motorisation module.

9. A motor vehicle (1), preferably of the bus type, including at least one set of wheels (2A, 2B) and a motorisation device (3) according to one of the previous claims for driving said set of wheels (2A, 2B).
